(19) Europäisches Patentamt
European Patent Office
Office européen des brevets

(11) Veröffentlichungsnummer: **0 036 106**
**B1**

(12) # EUROPÄISCHE PATENTSCHRIFT

(45) Veröffentlichungstag der Patentschrift: **28.09.83**

(51) Int. Cl.³: **A 01 N 57/20**

(21) Anmeldenummer: **81101282.2**

(22) Anmeldetag: **23.02.81**

(54) **Synergistische Kombinationen von Phosphinothricin.**

(30) Priorität: **04.03.80 DE 3008186**

(43) Veröffentlichungstag der Anmeldung: **23.09.81 Patentblatt 81/38**

(45) Bekanntmachung des Hinweises auf die Patenterteilung: **28.09.83 Patentblatt 83/39**

(84) Benannte Vertragsstaaten: **AT BE CH DE FR GB IT LI NL SE**

(56) Entgegenhaltungen:
**EP-A-0 009 022**
**DE-A-2 717 440**
**GB-A-2 007 976**
**GB-A-2 018 776**
**US-A-3 231 509**
**CENTRAL PATENT INDEX, Basic abstract Journal. C-AaDoc, Woche C 24, 6. August 1980, Zusammenfassung Nr. 42114C Derwent Publication Ltd London, GB**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Köcher, Helmut, Dr., Kleiststrasse 9, D-6238 Hofheim am Taunus (DE)**
Erfinder: **Bauer, Klaus, Dr., Kolpingstrasse 7, D-6054 Rodgau (DE)**
Erfinder: **Donn, Günter, Dr., Delkenheimer Strasse 5, D-6238 Hofheim am Taunus (DE)**
Erfinder: **Bieringer, Hermann, Dr., Eichenweg 26, D-6239 Eppstein/Taunus (DE)**

**EP 0 036 106 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Synergistische Kombinationen von Phosphinotricin

Die in neuerer Zeit aufgefundenen Herbizide vom Typ des Phosphinotricins

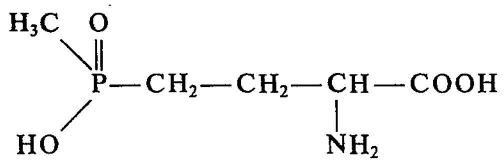

verfügen über eine gute Blattaufnahme und Kontaktwirkung und bekämpfen Unkräuter aller botanischen Klassen. Sie eignen sich deshalb zur nichtselektiven Bekämpfung von unerwünschtem Pflanzenwuchs auf landwirtschaftlichen Kulturflächen, Industrieanlagen usw. (vgl. DE-OS 2 717 440).

Herbizide des Phosphinotricin-Typs wirken sowohl gegen annuelle als auch perennierende Ungräser und Inkräuter: Einige wirtschaftlich bedeutende perennierende Schadpflanzen wie Quecke (Agropyron repens), Bermudagras (Cynodon dactylon), ausdauernde Cyperaceen und mehrjährige Dikotyle werden jedoch erst bei höheren Aufwandmengen befriedigend bekämpft.

Gemäß GB-A-2 018 776 finden auch herbizide Mittel Anwendung, die Phosphinotricin oder dessen Peptid Phosphinotricyl-Alanin-Alanin als Cholinsalz enthalten. In der GB-A-2 007 976 werden ferner Kombinationspräparate auf der Basis des genannten Phosphinotricin-Peptids beschrieben, die zusätzlich andere Herbizide sowie Cholin oder Diethylamin und deren Salze enthalten können.

Es wurden nun neue herbizide Mittel auf der Basis von Phosphinotricin und dessen Abkömmlinge gefunden, die überraschend starke synergistische Wirkungen bei der Bekämpfung von annuellen und perennierenden Unkräutern aufweisen. Synergismus liegt bekanntlich dann vor, wenn die Komponenten einer Mischung einen überadditiven Effekt zeigen. Im vorliegenden Fall werden Phosphinotricin bzw. seine Derivate mit Verbindungen kombiniert, die selbst keine herbizide Wirkung zeigen, jedoch die Wirkung dieser Herbizide erheblich verstärken.

Gegenstand der vorliegenden Erfindung sind somit herbizide Mittel, die gekennzeichnet sind durch einen Gehalt an

A) Phosphinotricinderivaten der Formel I

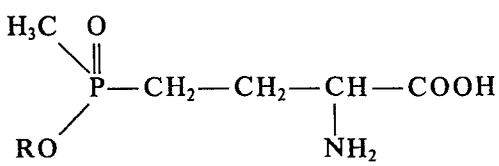

(I)

worin R Wasserstoff oder ($C_1-C_4$) bedeutet, deren Salzen mit Säuren oder Basen oder Phosphinotricyl-Alanyl-Alanin, in Kombination mit

B) anorganischen oder organischen Ammoniumsalzen der Formel

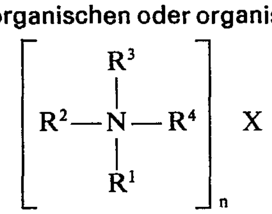

(II)

worin $R^1-R^4$ gleich oder verschieden sind und Wasserstoff oder Hydroxyethyl bedeuten, X das Anion einer anorganischen oder organischen ein- oder mehrbasigen Säure und n 1, 2 oder 3 ist, bzw. mit den Salzen der Formel II zugrunde liegenden freien Basen oder mit Harnstoff, oder mit

C) anorganischen oder organischen Chelatbildnern,
mit der Maßgabe, daß, falls R in Formel I Wasserstoff ist, die Verbindung B keine freie Base sein kann.

Phosphinotricin besitzt ein asymmetrisches Kohlenstoffatom und kann daher ebenso wie seine Derivate als Racemat oder in Form optisch aktiver Enantiomeren auftreten. Im Rahmen der vorliegenden Erfindung ist von den Enantiomeren das L-Enantiomer besonders bevorzugt.

Zu A) Aufgrund ihrer amphoteren Natur können Phosphinotricin und seine Ester mit anorganischen und organischen Basen und Säuren Salze bilden, die ebenso wie jene für die erfindungsgemäßen Mittel Verwendung finden können. Bei Anwendung von Basen entstehen

Verbindungen, in denen R ein Kationäquivalent darstellt.

Besonders hervorzuheben sind folgende Kationäquivalente:

$Na^+$, $K^+$, 1/2 $Ca^{++}$, 1/2 $Zn^{++}$, 1/2 $Mg^{++}$, $NH_4^+$, $N^+(CH_3)_4$, $H_2N^+(CH_3)_2$,
$H_2N^+(C_2H_5)_2$, $HN^+(C_2H_5)_3$, $H_3N^+CH_3$,
$H_3N^+C_3H_7(n)$, $H_3N^+C_4H_9(n)$, $H_2N^+(C_3H_7-i)_2$,
$H_3N^+CH_2CH_2OH$, $H_2N^+(CH_2CH_2OH)_2$,
$HN^+(CH_2CH_2OH)_3$, $(CH_3)_3N^+CH_2CH_2OH$,
$(CH_3)_2N^+HCH_2CH_2OH$, $CH_3N^+H_2CH_2CH_2OH$,
$(CH_3)_2N^+HC_{12}H_{25}$
sowie das Guanidiniumion.

Mit starken Basen wird auch die $-COOH$-Gruppe ionisiert; es entstehen dann z. B. Dinatrium- oder Dikaliumsalze.

Zur Salzbildung mit Säuren eignen sich anorganische und organische Säuren wie HCl, HBr, $H_3PO_4$, $HNO_3$, $CH_3COOH$.

Erfindungsgemäß kommt als Komponente A statt Phosphinothricin oder seiner Derivate auch das Phosphinothricyl-alanyl-alanin in Betracht, das in Helv. Chim. Acta 55, 244 f. (1972), beschrieben ist.

Zu B) Bei den Verbindungen vom Typ B handelt es sich vorzugsweise um Ammoniumsalze ($R^1-R^4=H$), doch kommen auch Salze organischer Ammoniumbasen mit Anionen (siehe A) in Betracht. Insbesondere bevorzugt werden als Anionen

$Cl^-$, $Br^-$, $SO_4^{2-}$, $HSO_4^-$, $PO_4^{3-}$, $HPO_4^{2-}$, $H_2PO_4^-$, $CH_3COO^-$,
$(COO^-)_2^{2-}$, $SCN^-$.

Daneben kommt auch Harnstoff in Frage.

Statt der Ammoniumsalze II kann man auch die ihnen zugrunde liegenden freien Basen in Kombination mit Phosphinothricinester, -salzen oder Phosphinothricyl-Alanyl-Alanin anwenden.

Zu C) Als Komplexbildner vom Typ C eignen sich z. B. mehrbasige organische Säuren wie Oxalsäure, Bernsteinsäure, Weinsäure, Zitronensäure, Nitrilotriessigsäure oder Ethylendiamintetraessigsäure (EDTA) oder deren Salze, ferner wasserlösliche Polyphosphate unterschiedlicher Kettenlänge (»Metaphosphate«, »Triphosphate«), wie sie z. B. in der Waschmittelindustrie verwendet werden. Derartige Komplexbildner sind zusammenfassend z. B. in O. A. Neumüller: Römpps Chemielexikon, 7. Auflage, 1972, S. 545 f. und 2768 f. beschrieben.

Die Verbindungen vom Typ B oder C können mit den Herbiziden des Typs A zu mehreren kombiniert werden.

Die Mischungsverhältnisse der einzelnen Komponenten können in den erfindungsgemäßen Kombinationen innerhalb weiter Grenzen schwanken. Synergistische Effekte werden bereits bei einem Verhältnis A : B (C) von 4 : 1 beobachtet und treten auch noch bei einem Verhältnis von 1 : 150 in Erscheinung. Aus praktischen Gründen wählt man Mengenverhältnisse jedoch zwischen 2 : 1 und 1 : 50, vorzugsweise zwischen 1 : 1 und 1 : 10.

Die erfindungsgemäßen Mischungen können sowohl als Fertigformulierungen, z. B. als benetzbare Pulver oder Emulsionskonzentrate, die dann in üblicher Weise mit Wasser verdünnt zur Anwendung gebracht werden, oder als sogenannte Tankmischungen vorliegen, die durch gemeinsame Verdünnung der getrennt formulierten Komponenten mit Wasser unmittelbar vor der Anwendung hergestellt werden. Ebenso können sie als Spritzbrühen bzw. wäßrige Lösungen ausgebracht werden.

Die Aufwandmengen der Herbizide vom Typ A in den Wirkstoffmischungen liegen im allgemeinen zwischen 0,10 und 5 kg/ha, die Aufwandmengen von B bzw. C zwischen 0,025 und 30 kg/ha, d. h. die Gesamtmenge an aufzuwendender Wirkstoffkombination beträgt etwa 0,125 bis 35 kg/ha.

Die erfindungsgemäßen Mittel können in den üblichen, dem Fachmann geläufigen Zubereitungen, z. B. als benetzbare Pulver, emulgierbare Konzentrate oder versprühbare Lösungen, in den Handel gebracht werden. Die formulierten Mittel enthalten dabei die erfindungsgemäßen Wirkstoffkombinationen im allgemeinen zu 2 bis 95 Gew.-%.

Benetzbare Pulver sind in Wasser gleichmäßig dispergierbare Präparate, die neben den Wirkstoffen außer einem Verdünnungs- oder Inertstoff noch Netzmittel, z. B. polyoxäthylierte Alkylphenole, Alkyl- oder Alkylphenyl-sulfonate und Dispergiermittel, z. B. ligninsulfonsaures Natrium, dinaphthylmethandisulfonsaures Natrium oder auch oleoylmethyltaurinsaures Natrium enthalten.

Emulgierbare Konzentrate werden durch Auflösen des Wirkstoffgemisches in einem organischen Lösungsmittel, z. B. Butanol, Cyclohexanon, Dimethylformamid, Xylol oder auch höhersiedenden Aromaten und Zusatz eines Emulgators, beispielsweise eines polyoxäthylierten Alkylphenols erhalten.

Bei herbiziden Mitteln können die Konzentrationen der Wirkstoffe in den handelsüblichen Formulierungen verschieden sein. In benetzbaren Pulvern variiert die Wirkstoffkonzentration (Herbizid + Synergist) z. B. zwischen etwa 10% und 95%, der Rest besteht aus den oben angegebenen Formulierungszusätzen. Bei emulgierbaren Konzentraten ist die Wirkstoffkonzentration etwa 10% bis 80%. Staubförmige Formulierungen enthalten meistens 5% bis 20% an Wirkstoff, versprühbare

Lösungen etwa 2% bis 20%. Bei Granulaten hängt der Wirkstoffgehalt z. B. davon ab, in welcher Form (flüssig oder fest) die Wirkstoffe vorliegen und welche Granulierhilfsmittel, Füllstoffe usw. verwendet werden. Zur Anwendung werden die handelsüblichen Konzentrate gegebenenfalls in üblicher Weise verdünnt, z. B. bei benetzbaren Pulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt. Mit den äußeren Bedingungen wie Temperatur, Feuchtigkeit u. a. variiert die erforderliche Aufwandmenge.

Die erfindungsgemäßen Mittel können bei Bedarf mit anderen Herbiziden, Fungiziden und Insektiziden kombiniert werden. Die Erfindung wird durch die nachfolgenden Beispiele erläutert:

## Beispiel 1

Samen einjähriger Unkräuter bzw. Rhizomstücke mehrjähriger Schadpflanzen wurden in mit Lehmerde gefüllten Plastiktöpfen ausgelegt und in einem Gewächshaus unter günstigen Wachstumsbedingungen aufgestellt.

Nach 3 Wochen hatten die Pflanzen 3–4 Blätter ausgebildet. In diesem Stadium wurden die Versuchspflanzen entweder mit dem Herbizid in verschiedenen Dosierungen oder mit Mischungen aus Herbizid und Synergisten besprüht, wobei die Aufwandmenge des Synergisten konstant bei 12 kg/ha gehalten wurde. Ferner wurden zu Vergleichszwecken auch Testpflanzen mit einer Lösung des Synergisten allein behandelt. Die Flüssigkeitsmenge betrug in allen Fällen 600 l/ha.

3 Wochen nach der Behandlung wurde der Schädigungsgrad der behandelten Pflanzen im Vergleich zur unbehandelten Kontrolle bonitiert.

Die in Tabelle 1 dargestellten Ergebnisse zeigen, daß der Synergist allein die Pflanzen nicht schädigte, in Kombination mit dem Testherbizid die Wirkung des Herbizids jedoch beträchtlich steigert.

Während beispielsweise bei Alopecurus eine Konzentration von 0,6 kg/ha des Herbizids die Pflanzen zu 80% schädigt, wird bei zusätzlicher Anwendung von 12 kg/ha des Synergisten der gleiche Schädigungsgrad schon bei einer Herbizidmenge von 0,15 kg/ha erreicht.

Hervorzuheben ist auch die Wirkungssteigerung, die bei den perennierenden Unkräutern Agropyron (Quecke), Cyperus (Sauergras) und Cynodon (Bermudagras) durch den Zusatz des Synergisten eintritt. Bei diesen Spezies handelt es sich um wirtschaftlich besonders bedeutende Unkräuter, deren Bekämpfung äußerst schwierig ist.

Tabelle 1
(Pflanzenschädigung in %)

| Verbindung | Dosierung kg AS/ha | AVF | ALM | SAL | LOM | ECG | AGR | CYE | CND |
|---|---|---|---|---|---|---|---|---|---|
| Phosphino-tricinhydro-chlorid (A II) | 0.6 | 75 | 80 | 100 | 95 | 90 | 32 | 65 | 65 |
| | 0.15 | 32 | 32 | 70 | 32 | 38 | – | – | – |
| | 0.08 | 0 | 0 | 32 | 0 | 11 | – | – | – |
| Ammonsulfat (B I) | 12.0 | 0 | 0 | 0 | 0 | 0 | 0 | 0 | 0 |
| A II + B I | 0.6 + 12.0 | 100 | 95 | 100 | 100 | 94 | 85 | 85 | 90 |
| | 0.15 + 12.0 | 65 | 80 | 85 | 70 | 74 | – | – | – |
| | 0.08 + 12.0 | 32 | 32 | 65 | 65 | 38 | – | – | – |

Abkürzungen für Tabellen 1 bis 8:

AVF = Avena (Flughafer).
ALM = Alopecurus (Fuchsschwanz).
SAL = Setaria (Borstenhirse).
LOM = Lolium (Raygras).
POA = Poa (Rispengras).
SDS = Sida.
AS = Aktivsubstanz.
ABT = Abutylon.
ECG = Echinochloa (Hühnerhirse).
AGR = Agropyron (Quecke).
CYE = Cyperus (Sauergras).
CND = Cynodon (Bermudagras).
SRH = Sorghum.
DIS = Digitaria (Fingerhirse).
COA = Convolvulus (Ackerwinde).
CRS = Chrysanthemum (Saatwucherblume).

## Beispiel 2

Samen von Echinochloa crus-galli wurden in Plastiktöpfen mit Lehmerde ausgesät und im Gewächshaus aufgestellt. Nach drei Wochen, d. h. nach Erreichen des 3–4-Blattstadiums, wurden die Pflanzen mit Lösungen besprüht, die das Herbizid allein oder in Mischung mit einem Synergisten in verschiedenen Dosierungen enthielten, wobei die Aufwandmenge des Synergisten in allen Fällen 3,6 kg/ha betrug. Zu Vergleichszwecken wurde eine Lösung verwendet, die nur den Synergisten enthielt. 2 Wochen nach der Behandlung wurde der Schädigungsgrad der Pflanzen in Prozent im Vergleich zu unbehandelten Kontrollpflanzen bonitiert. Die in Tabelle 2 dargestellten Ergebnisse zeigen, daß der Synergist allein die Pflanzen nicht schädigte, in Kombination mit dem Herbizid dessen Wirkung gegen Echinochloa crus-galli jedoch beträchtlich steigerte.

Tabelle 2

Schädigung von Echinochloa (Wirkung in %)

| Verbindung | Dosierungen kg a.i./ha | ECG |
|---|---|---|
| Phosphinothricin-ammoniumsalz (A III) | 0.2 | 80 |
| | 0.1 | 50 |
| | 0.05 | 40 |
| | 0.025 | 5 |
| Ammoniumnitrat (B II) | 3.6 | 0 |
| A III + B II | 0.2 + 3.6 | 90 |
| | 0.1 + 3.6 | 80 |
| | 0.05 + 3.6 | 65 |
| | 0.025 + 3.6 | 40 |

## Beispiel 3

Die in Tabelle 3 aufgeführten Pflanzen wurde unter den in Beispiel 1 beschriebenen Bedingungen in Kunststofftöpfen aus Samen aufgezogen und im 3–4-Blattstadium mit 0,4, 0,2 bzw. 0,1 kg/ha Phosphinothricin-Monoammoniumsalz (A III) bzw. Phosphinothricin (A I) allein und in Kombination mit Synergisten behandelt. 3 Wochen nach Applikation der Lösungen wurde der Schädigungsgrad der Testpflanzen gegenüber den unbehandelten Kontrollen in Prozent bonitiert.

Aus Tabelle 3 wird ersichtlich, daß die Synergisten allein in den geprüften Konzentrationen nicht phytotoxisch sind. Werden die Substanzen aber zusammen mit den Herbiziden A III bzw. A I appliziert, so wird deren herbizide Wirkung in allen Konzentrationen erheblich verstärkt. Dieser unerwartete Synergismus erlaubt eine Reduktion der Herbizid-Aufwandmenge auf ungefähr die Hälfte.

Tabelle 3

Schädigungsgrad in % der unbehandelten Kontrolle

| Verbindung | Dosierung kg/ha | AVF | ALM | LOM | ECG | AGR | CND | POA |
|---|---|---|---|---|---|---|---|---|
| Harnstoff (B III) | 3 | 0 | 0 | 0 | 0 | 0 | 0 | – |
| B I | 6 | 0 | 0 | 0 | 0 | 0 | 0 | 0 |
| Na-EDTA (C I) | 3 | 0 | 0 | 0 | 0 | 0 | 0 | – |
| Phosphinothricin (A I) | 0.4 | 45 | 40 | 63 | | 0 | 0 | 30 |
| | 0.2 | 10 | 30 | 50 | | – | – | 15 |
| A III | 0.4 | 45 | 30 | 35 | 94 | 13 | 10 | – |
| | 0.2 | 15 | 5 | 23 | 90 | – | – | – |
| | 0.1 | 10 | 0 | 15 | 10 | – | – | – |
| A III + B III | 0.4 + 3 | 45 | 48 | 60 | 100 | 25 | 10 | – |
| | 0.2 + 3 | 30 | 40 | 30 | 98 | – | – | – |
| | 0.1 + 3 | 20 | 0 | 25 | 45 | – | – | – |
| A III + B I | 0.4 + 6 | 80 | 75 | 80 | 100 | 65 | 50 | – |
| | 0.2 + 6 | 45 | 65 | 68 | 100 | – | – | – |
| | 0.1 + 6 | 20 | 20 | 33 | 99 | – | – | – |
| A III + C I | 0.4 + 3 | 55 | 73 | 68 | 100 | 35 | 20 | – |
| | 0.2 + 3 | 45 | 38 | 43 | 99 | – | – | – |
| | 0.1 + 3 | 20 | 20 | 23 | 88 | – | – | – |
| A I + B I | 0.4 + 6 | 83 | 75 | 93 | | 65 | 55 | 45 |
| | 0.2 + 6 | 25 | 55 | 88 | | – | – | 30 |

Beispiel 4

Die in Tabelle 4 aufgeführten Pflanzen wurden unter den in Beispiel 1 beschriebenen Bedingungen aufgezogen und im 3–4-Blattstadium entweder mit Herbizid bzw. Synergisten allein oder in Kombination miteinander gespritzt. Die Bonitur erfolgte 3 Wochen nach der Applikation. Die Ergebnisse sind in Tabelle 4 zusammengestellt.

Die Synergisten bewirkten in Mischung mit dem Ammoniumsalz des Phosphinotricins (A III) eine auch bei sehr niedrigen Herbiziddosen beachtliche Schädigung der Unkräuter, während sie für sich allein keine oder nur eine sehr schwache phytotoxische Wirkung zeigten.

Tabelle 4
(Schädigung in %)

| Verbindung | Dosierung kg AS/ha | CYE | SDS | ECG | SRH | DIS |
|---|---|---|---|---|---|---|
| B I | 6.0 | 0 | 0 | 0 | 0 | 0 |
| Ammonchlorid (B IV) | 4.8 | 0 | 0 | 0 | 0 | 0 |
| C I | 3.0 | 0 | 0 | 5 | 0 | 0 |
| Kaliumtriphosphat $(KPO_3)_3$, (C II) | 3.0 | 0 | 0 | 5 | 0 | 0 |
| A III | 0.4 | 30 | – | – | – | – |
| | 0.2 | 10 | 98 | 25 | 40 | 70 |
| | 0.1 | – | 70 | 13 | 8 | 55 |
| A III + B I | 0.4 + 6 | 70 | – | – | – | – |
| | 0.2 + 6 | 58 | 100 | 90 | 90 | 99 |
| | 0.1 + 6 | – | 97 | 58 | 48 | 88 |
| A III + B IV | 0.4 + 4.8 | 55 | – | – | – | – |
| | 0.2 + 4.8 | 50 | 100 | 70 | 70 | 98 |
| | 0.1 + 4.8 | – | 98 | 30 | 35 | 68 |
| A III + C I | 0.4 + 3.0 | 60 | – | – | – | – |
| | 0.2 + 3.0 | 50 | 100 | 90 | 83 | 80 |
| | 0.1 + 3.0 | – | 90 | 68 | 55 | 65 |
| A III + C II | 0.4 + 3.0 | 60 | – | – | – | – |
| | 0.2 + 3.0 | 35 | 100 | 80 | 80 | 100 |
| | 0.1 + 3.0 | – | 80 | 60 | 48 | 88 |

Beispiel 5

Die in Tabelle 5 aufgeführten Pflanzen wurden unter den in Beispiel 1 beschriebenen Bedingungen aufgezogen und im 3–4-Blattstadium entweder mit verschiedenen Phosphinothricin-Salzen bzw. Ammoniumsulfat allein oder in Kombination miteinander gespritzt. Die Dosierung des Ammoniumsulfats entsprach 6 kg/ha. Die Phosphinothricin-Salze wurden in verschiedenen Dosierungen eingesetzt. Die Wasseraufwandmenge entsprach 400 l/ha. Drei Wochen nach der Applikation erfolgte die Bonitur. Die Ergebnisse sind in Tabelle 5 zusammengestellt.

Sie zeigen, daß Ammoniumsulfat für sich allein nicht herbizid wirkt, in Kombination mit Alkali-, Erdalkali- und dem Ammoniumsalz des Phosphinothricins deren herbizide Wirkung gegen ein- und zweikeimblättrige Unkrautarten jedoch steigert.

Ohne Zugabe von Ammoniumsulfat muß im Schnitt die doppelte, teilweise sogar die vierfache Aufwandmenge an Phosphoniumthricin-Derivat eingesetzt werden, um den gleichen herbiziden Wirkungsgrad zu erzielen wie bei Zusatz von Ammoniumsulfat.

Beispiel 6

Bei der Bekämpfung mehrjähriger Unkräuter wird eine möglichst gute Dauerwirkung, d. h. eine

möglichst lange Unterdrückung des Wiederaustriebs aus unterirdischen Pflanzenorganen (Rhizome, Wurzelstöcke), angestrebt.

Am Beispiel der Quecke (Agropyron) wurde untersucht, wie sich eine Zumischung von Ammoniumsulfat (4 kg/ha) in Phosphinothricin-Ammoniumsalz auf die Dauerwirkung dieses Herbizids auswirkt.

Hierzu wurden Queckenpflanzen in Plastikeimern in sandigem Lehmboden unter Gewächshausbedingungen herangezogen und im 5–6-Blattstadium mit verschiedenen Dosierungen von Phosphinothricinammoniumsalz (A III) allein bzw. in Kombination mit 4 kg/ha Ammoniumsulfat (B I) besprüht (Wasseraufwandmenge 400 l/ha). Nach 4 Wochen Standzeit im Gewächshaus wurden die oberirdischen Pflanzenteile der behandelten Pflanzen wie auch unbehandelte Kontrollpflanzen abgeschnitten und die Gefäße weitere 7 Wochen im Gewächshaus aufgestellt.

Nach dieser Zeit wurden die wiederausgetriebenen Blätter abgeschnitten, bei 100° C getrocknet und die Trockenmasse der Blätter bestimmt. Die Blatt-Trockenmasse je Gefäß der behandelten Versuchsglieder wurde in der Blatt-Trockenmasse unbehandelter Kontrollgefäße in Beziehung gesetzt. Die Ergebnisse zeigt Tabelle 6.

Bei sämtlichen Dosierungen des Wirkstoffes wurde der Wiederaustrieb der Quecke durch Zusatz von Ammoniumsulfat stark unterdrückt. Ammoniumsulfat allein zeigte keine Wirkung.

Die Ergebnisse demonstrieren, daß Ammoniumsulfat bei mehrjährigen Pflanzen offensichtlich die systemische Wirkung von Phosphinothricin verstärkt und dadurch zu einer verlängerten Daueriwrkung dieses Herbizids führt.

Tabelle 5
(Schädigung in %)

| Verbindung | Dosierung (kg AS/ha) | AGR | LOM | CRS | COA |
|---|---|---|---|---|---|
| Ammoniumsulfat (B I) | 6.0 | 0 | 0 | 0 | 0 |
| Phosphinothricin-Kalziumsalz (A IV) | 0.8 | 75 | 75 | | |
| | 0.4 | 43 | 47 | | |
| | 0.2 | 33 | 30 | 53 | |
| | 0.1 | | | 37 | |
| A IV + B I | 0.8 + 6.0 | 95 | 92 | | |
| | 0.4 + 6.0 | 87 | 63 | | |
| | 0.2 + 6.0 | 70 | 43 | 90 | |
| | 0.1 + 6.0 | | | 73 | |
| Phosphinothricin-Monokaliumsalz (A V) | 0.8 | 78 | 47 | | |
| | 0.4 | 47 | 33 | | |
| | 0.2 | 28 | 25 | 60 | |
| | 0.1 | | | 27 | |
| A V + B I | 0.8 + 6.0 | 93 | 85 | | |
| | 0.4 + 6.0 | 75 | 68 | | |
| | 0.2 + 6.0 | 57 | 43 | 97 | |
| | 0.1 + 6.0 | | | 67 | |

Fortsetzung

| Verbindung | Dosierung (kg AS/ha) | AGR | LOM | CRS | COA |
|---|---|---|---|---|---|
| Phosphinothricin-Dikaliumsalz (A VI) | 0.8 | 60 | 57 | | |
| | 0.4 | 43 | 37 | | |
| | 0.2 | 30 | 27 | 47 | |
| | 0.1 | | | 37 | |
| A VI + B I | 0.8 + 6.0 | 94 | 83 | | |
| | 0.4 + 6.0 | 75 | 63 | | |
| | 0.2 + 6.0 | 53 | 43 | 98 | |
| | 0.1 + 6.0 | | | 50 | |
| Phosphinothricin-Mononatriumsalz (A VII) | 0.8 | 77 | 67 | | |
| | 0.4 | 50 | 43 | 85 | |
| | 0.2 | 33 | 30 | 43 | |
| | 0.1 | | | 23 | |
| A VII + B I | 0.8 + 6.0 | 91 | 80 | | |
| | 0.4 + 6.0 | 75 | 65 | 100 | |
| | 0.2 + 6.0 | 63 | 43 | 100 | |
| | 0.1 + 6.0 | | | 80 | |
| Phosphinothricin-Ammoniumsalz (A III) | 0.8 | 87 | 68 | | |
| | 0.4 | 73 | 43 | 98 | 53 |
| | 0.2 | 43 | 30 | 40 | 33 |
| | 0.1 | | | 20 | 27 |
| A III + B I | 0.8 + 6.0 | 96 | 93 | | |
| | 0.4 + 6.0 | 82 | 73 | 100 | 95 |
| | 0.2 + 6.0 | 75 | 43 | 100 | 70 |
| | 0.1 + 6.0 | | | 53 | 47 |

Tabelle 6

Wiederaustrieb von Quecke 11 Wochen nach Herbizidanwendung (wiederausgetriebene Blattmasse der behandelten Pflanzen in Prozent der Blattmasse behandelter Kontrollen)

| Präparat | Dosierung (kg AS/ha) | Blattmasse (% Kontrolle) |
|---|---|---|
| A III | 2.0 | 16 |
| | 1.0 | 48 |
| | 0.5 | 81 |
| A III + B I | 2.0 + 4.0 | 0.5 |
| | 1.0 + 4.0 | 22 |
| | 0.5 + 4.0 | 31 |

Beispiel 7

Pflanzen wurden nach der unter Beispiel 1 beschriebenen Methode aufgezogen und im 3—4-Blattstadium mit den Lösungen besprüht, deren Zusammensetzung in Tabellen 7 und 8 angegeben ist. Die Wasseraufwandmenge betrug 400 l/ha (bei Untersuchung der Synergisten B V, B VI, B VII).

4 Wochen nach der Applikation erfolgte die Bonitur. Wie aus Tabelle 7 ersichtlich, verbesserten die Äthanolaminsalze durchwegs die herbizide Wirkung von Phosphinothricin-Ammoniumsalz.

Häufig genügte bei den Kombinationen mit den Synergisten die Hälfte der Aufwandmenge an Phosphinothricin-Ammoniumsalz, die bei Anwendung von Phosphinothricin-Ammoniumsalz allein erforderlich war, um eine gleich starke herbizide Wirkung zu erzielen. Bei alleiniger Anwendung waren die Synergisten nicht phytotoxisch.

Tabelle 7
(Pflanzenschädigung in %)

| Verbindung | Dosierung (kg AS/ha) | LOM | ABT | IPP |
|---|---|---|---|---|
| Monoäthanolammonium-acetat (B V) | 1.0 | 0 | 0 | 0 |
| Diäthanolammonium-acetat (B VI) | 1.0 | 0 | 0 | 0 |
| Triäthanolammonium-acetat (B VII) | 1.0 | 0 | 0 | 0 |
| Phosphinothricin-Ammoniumsalz (A III) | 0.8 | 66 | – | 61 |
| | 0.4 | 20 | 86 | 50 |
| | 0.2 | 3 | 58 | 25 |
| | 0.1 | – | 6 | – |
| A III + B V | 0.8 + 1.0 | 84 | – | 85 |
| | 0.4 + 1.0 | 43 | 99 | 80 |
| | 0.2 + 1.0 | 9 | 90 | 28 |
| | 0.1 + 1.0 | – | 65 | – |
| A III + B VI | 0.8 + 1.0 | 76 | – | 92 |
| | 0.4 + 1.0 | 53 | 100 | 77 |
| | 0.2 + 1.0 | 18 | 99 | 30 |
| | 0.1 + 1.0 | – | 73 | – |
| A III + B VII | 0.8 + 1.0 | 76 | – | 93 |
| | 0.4 + 1.0 | 48 | 98 | 70 |
| | 0.2 + 1.0 | 20 | 70 | 30 |
| | 0.1 + 1.0 | – | 60 | – |

**Patentansprüche**

1. Herbizide Mittel, gekennzeichnet durch einen Gehalt an

A) Phosphinothricinderivaten der Formel I

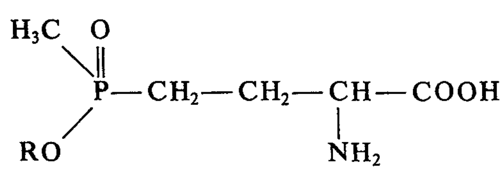

(I)

worin R Wasserstoff oder $(C_1-C_4)$-Alkyl bedeutet, deren Salzen mit Säuren oder Basen, oder Phosphinothricyl-Alanyl-Alanin, in Kombination mit

B) anorganischen oder organischen Ammoniumsalzen der Formel

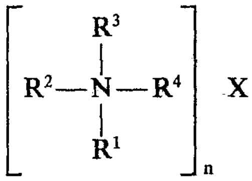

(II)

worin $R^1-R^4$ gleich oder verschieden sind und Wasserstoff oder Hydroxyethyl bedeuten, X das Anion einer anorganischen oder organischen ein- oder mehrbasigen Säure und n 1, 2 oder 3 ist, bzw. mit den den Salzen der Formel II zugrunde liegenden freien Basen oder mit Harnstoff, oder

C) anorganischen oder organischen Chelatbildnern,

mit der Maßgabe, daß, falls R in Formel I Wasserstoff ist, die Verbindung B keine freie Base sein kann.

2. Herbizide Mittel gemäß Anspruch 1, dadurch gekennzeichnet, daß die Komponente A eine Verbindung der Formel

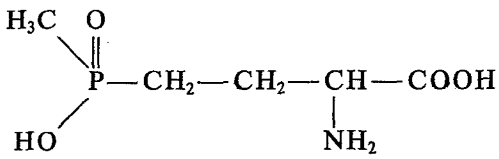

(IV)

oder deren Natrium-, Kalium- oder Ammoniumsalz ist.

3. Herbizide Mittel gemäß Anspruch 1 oder 2, dadurch gekennzeichnet, daß die Komponente B Ammonsulfat, Ammonnitrat, Ammonchlorid oder Harnstoff ist.

4. Herbizide Mittel gemäß Anspruch 1 oder 2, dadurch gekennzeichnet, daß die Komponente B Mono-, Di- oder Tri-ethanol-ammoniumacetat ist.

5. Herbizide Mittel gemäß Anspruch 1 oder 2, dadurch gekennzeichnet, daß die Komponente C Na-EDTA oder K-triphosphat ist.

6. Herbizide Mittel gemäß Anspruch 1, dadurch gekennzeichnet, daß die Komponente A die Verbindung der Formel IV oder ihr Ammoniumsalz und die Komponente B Ammoniumsulfat ist.

7. Mittel gemäß einem der Ansprüche 1–5, dadurch gekennzeichnet, daß das Gewichtsverhältnis der Komponenten A zu B oder C zwischen 4 : 1 und 1 : 150 liegt.

8. Mittel gemäß einem der Ansprüche 1–5, dadurch gekennzeichnet, daß das Gewichtsverhältnis der Komponenten A zu B oder C zwischen 2 : 1 und 1 : 50 liegt.

9. Mittel gemäß einem der Ansprüche 1–5, dadurch gekennzeichnet, daß das Gewichtsverhältnis der Komponenten A zu B oder C zwischen 1 : 1 und 1 : 10 liegt.

10. Verwendung von Mitteln gemäß einem der Ansprüche 1–8 zur Unkrautbekämpfung.

11. Verfahren zur Bekämpfung von Unkräutern, dadurch gekennzeichnet, daß man auf die von ihnen befallenen Flächen ein Mittel gemäß einem der Ansprüche 1–8 in Mengen von 0,125 bis 35 kg pro ha aufbringt.

**Claims**

1. Herbicidal compositions which comprise an amount of

A) phosphinothricine derivatives of the formula

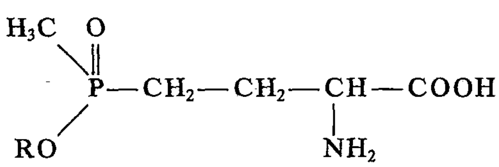

(I)

in which R is hydrogen or $(C_1-C_4)$-alkyl, their salts with acids or bases of phosphinothricyl-alanyl-alanine, in combination with

B) inorganic or organic ammonium salts of the formula

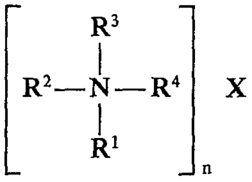

(II)

in which $R^1$ to $R^4$, being identical or different, each are hydrogen, or hydroxyethyl; X is the anion of an inorganic or organic mono- or polybasic acid and n is 1, 2 or 3, or with the free bases from which the salts of the formula II are derived, or with urea or

C) inorganic or organic chelating agents, with the proviso that, if R in formula I is hydrogen, the compound B is not a free base.

2. Herbicidal compositions according to claim 1, wherein component A) is a compound of the formula

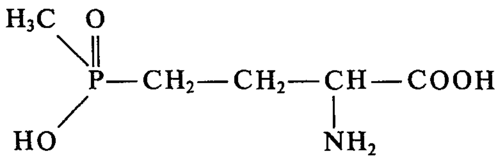

(IV)

or its sodium-, potassium- or ammonium salt.

3. Herbicidal compositions according to claims 1 or 2, wherein the component B is ammonium sulphate, ammonium nitrate, ammonium chloride or urea.

4. Herbicidal compositions according to claims 1 or 2 wherein the component B is mono-, di- or tri-ethanol-ammonium acetate.

5. Herbicidal compositions according to claims 1 or 2 wherein the component C is Na-EDTA or K-triphosphate.

6. Herbicidal compositions according to claim 1 wherein component A is the compound of formula IV or its ammonium salt and compound B is ammonium sulphate.

7. Compositions as claimed in anyone of claims 1 to 5, wherein the weight ratio of components A to B or C is between 4 : 1 and 1 : 50.

8. Compositions as claimed in anyone of claims 1 to 5 wherein the weight ratio of components A to B or C is between 2 : 1 and 1 : 50.

9. Compositions as claimed in anyone of claims 1 to 5 wherein the weight ratio of components A to B or C is from 1 : 1 to 1 : 10.

10. Use of compositions as claimed in anyone of claims 1 to 8 for combating weeds.

11. A process for combating weeds which comprises appyling to the areas infested by them a composition as claimed in claims 1 to 8 in amounts of from 0.125 to 35 kg per hectare.

**Revendications**

1. Produits herbicides caractérisés en ce qu'ils contiennent:

A) des dérivés de la phosphinothricine répondant à la formule I

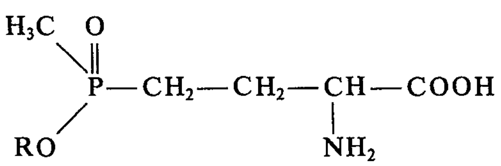

(I)

dans laquelle R représente l'hydrogène ou un radical alkyle en $C_1-C_4$, des sels de ces composés avec des acides ou des bases, ou la phosphinothricyl-alanyl-alanine, associés à:

B) des sels d'ammoniums minéraux ou organiques répondant à la formule II

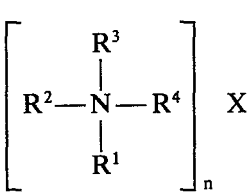

(II)

dans laquelle les symboles $R^1$ à $R^4$ représentent chacun, indépendamment les uns des autres, l'hydrogène ou un radical hydroxy-éthyle, X représente l'anion d'un mono-acide ou polyacide minéral ou organique et n est égal à 1, à 2 ou à 3, ou aux bases libres correspondant aux sels de formule II ou à l'urée, ou à

C) des générateurs de chélates minéraux ou organiques, avec la restriction que lorsque le symbole R présent dans la formule I représente un atome d'hydrogène le composé B ne peut pas être une base libre.

2. Produits herbicides selon la revendication 1, caractérisés en ce que la composante A est un composé de formule:

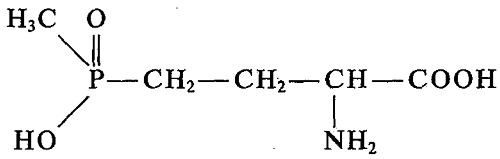

(IV)

ou son sel de sodium, de potassium ou d'ammonium.

3. Produits herbicides selon l'une des revendications 1 et 2, caractérisés en ce que la composante B est le sulfate d'ammonium, le nitrate d'ammonium, le chlorure d'ammonium ou l'urée.

4. Produits herbicides selon l'une des revendications 1 et 2, caractérisés en ce que la composante B est l'acétate de mono-, di- ou tri-éthanol-ammonium.

5. Produits herbicides selon l'une des revendications 1 et 2, caractérisés en ce que la composante C est le sel sodique de l'EDTA ou le triphosphate de potassium.

6. Produits herbicides selon l'une des revendications 1 et 2, caractérisés en ce que la composante A est le composé de formule IV ou son sel d'ammonium et la composante B est le sulfate d'ammonium.

7. Produits selon l'une quelconque des revendications 1 à 5, caractérisés en ce que le rapport pondéral des composantes A à B ou C est compris entre 4 : 1 et 1 : 150.

8. Produits selon l'une quelconque des revendications 1 à 5, caractérisés en ce que le rapport pondéral des composantes A à B ou C est compris entre 2 : 1 et 1 : 50.

9. Produits selon l'une quelconque des revendications 1 à 5, caractérisés en ce que le rapport pondéral des composantes A à B ou C est compris entre 1 : 1 et 1 : 10.

10. Utilisation de produits selon l'une quelconque des revendications 1 à 8 pour la lutte contre les plantes adventices.

11. Procédé pour combattre des plantes adventices, caractérisé en ce qu'on applique, sur les surfaces attaquées par lesdites plantes, un produit selon l'une quelconque des revendications 1 à 8 en des quantités de 0,125 à 35 kg par hectare.